# EUROPÄISCHE PATENTSCHRIFT

(11) **EP 0 678 677 B1**
(45) Veröffentlichungstag und Bekanntmachung des Hinweises auf die Patenterteilung: **10.05.2000**
(21) Anmeldenummer: 95810051.3
(22) Anmeldetag: 27.01.1995
(51) Int. Cl.: F16B 13/14, E21D 20/02, E01B 9/10, E01B 9/18, F16B 13/00

(54) **Befestigungsanker**
Fastening anchor
Boulon d'ancrage

(30) Priorität: 20.04.1994 DE 4413743
(43) Veröffentlichungstag der Anmeldung: 25.10.1995
(73) Patentinhaber: HILTI Aktiengesellschaft, 9494 Schaan (LI)
(72) Erfinder: Popp, Franz, D-86807 Buchloe (DE); Sedlmeier, Andreas, D-86932 Ummendorf (DE)
(74) Vertreter: Wildi, Roland

(56) Entgegenhaltungen:
- EP-A- 0 222 095
- EP-A- 0 372 200
- EP-A- 0 568 802
- CH-A- 328 351
- DE-A- 3 014 569
- FR-A- 2 566 017
- US-A- 2 779 543
- US-A- 4 642 964

## Beschreibung

Die Erfindung betrifft einen Befestigungsanker zum Befestigen eines auf der Oberfläche eines Untergrundes aufliegenden Bauteiles gemäß dem Oberbegriff des Anspruchs 1.

Aus der DE-OS 30 14 569 ist ein Befestigungsanker zur spreizdruckfreien Befestigung in Untergründen geringerer Festigkeit bekannt. In ein mit aushärtbarer Masse verfülltes Bohrloch des Untergrundes ragt der Befestigungsanker mit einem Verankerungsbereich. Im Mündungsbereich des Bohrloches sitzt eine, die Ankerstangen umgebende Zentrierhülse, die die Ankerstange gegenüber dem Bohrloch zentriert. Die Zentrierhülse stützt sich dabei an der Innenwandung des Bohrloches radial ab. An der Oberfläche des Untergrundes liegt ein Bauteil mit einer Durchtrittsöffnung auf, die durchsetzt wird von dem Befestigungsanker. An einem aus dem Bohrloch ragenden Endbereich der Ankerstange ist ein Kraftangriffsmittel angeordnet, das das Bauteil gegen die Oberfläche des Untergrundes drückt. Die Zentrierhülse weist am Umfang in Längsrichtung verlaufende Nuten auf, die beim Einsetzen des Befestigungsankers in das mit aushärtbarer Masse verfüllte Bohrloch ein Verdrängen eines Teiles der aushärtbaren Masse aus dem Bohrloch heraus zulässt. Diese aus dem Bohrloch verdrängte, aushärtbare Masse kommt an die Oberfläche des Untergrundes und härtet dort aus, so dass vor dem Aufsetzen des Bauteiles auf die Oberfläche des Untergrundes die aus dem Bohrloch ragende, ausgehärtete Masse mit einem geeigneten Handwerkzeug, insbesondere eines Messers entfernt werden muss. Zudem ist eine Lageveränderung, beispielsweise ein Nachspannen des Bauteiles, aufgrund der einen starren Anschlag bildenden aushärtenden Masse nicht möglich.

Aus der US-A-4 642 964 ist ein solcher Befestigungsanker bekannt. Er setzt sich zusammen aus einer einen Verankerungsbereich aufweisenden Ankerstange, einem Kraftangriffsmittel, einer zwischen dem Kraftangriffsmittel und dem Verankerungsbereich angeordneten, die Ankerstange umgebenden Hülse, einer elastischen Dichtscheibe und einer Stützscheibe. Die Durchgangsbohrungen beider Scheiben enspricht im wesentlichen dem Aussendurchmesser der Hülse. Die Hülse weist an einem dem Kraftangriffsmittel zugewandten freien Endbereich eine radiale Erweiterung mit einer dem Verankerungsbereich zugewandten ringförmigen Anschlagfläche auf, an der die Stützscheibe anliegt. Die dem Verankerungsbereich zugewandten Seite der Stützscheibe steht mit der Dichtscheibe in Kontakt. Die Aussendurchmesser der Stützscheibe und der Dichtscheibe überragen den Aussendurchmesser der Hülse.

Die EP-A-568802 offenbart in Fig. 5 ein Hülse für ein Bohrloch mit Sollbruchstellen, die jedoch in anderer Weise wirken als die hier beanspruchten.

Der Erfindung liegt die Aufgabe zugrunde, einen Befestigungsanker zu schaffen, bei dem die aushärtbare Masse beim Einsetzen des Befestigungsankers in das Bohrloch des Untergrundes nicht an die Oberfläche des Untergrundes gelangen kann und zudem die ausgehärtete Masse keine Behinderung in der Funktion des Befestigungsankers darstellt.

Erfindungsgemäss wird dies durch die Merkmale des Kennzeichnungsteils des Anspruchs 1 erreicht.

Der Zentrierhülse des erfindungsgemässen Gegenstandes ist somit ein Dichtungselement mit einer Dichtungsebene vorgelagert, das zusammen mit der Zentrierhülse in das Bohrloch ragt. Aufgrund der Versetzbarkeit der Dichtungsebene ist ein Versetzen der Zentrierhülse gegenüber der ausgehärteten Masse möglich.

Eine Versetzung der Dichtungsebene des Dichtungsringes ist möglich, da die Dichtungsebene Teil eines Dichtungsringes ist, der mittels Soll-Bruchstegen in axialem Abstand von der Führungshülse gehalten ist.

Um eine Abdichtung zwischen dem Verankerungsbereich der Ankerstange und der Wandung des Bohrloches erreichen zu können, entspricht der Aussendurchmesser der Dichtungsebene vorteilhafterweise dem Aussendurchmesser der Zentrierhülse.

Aus herstellungs- und anwendungstechnischen Gründen sind vorzugsweise die Zentrierhülse, die Soll-Bruchstege und der Dichtungsring zu einer Einheit miteinander verbunden. Die Führungshülse und der Dichtungsring verlaufen dabei im wesentlichen koaxial zueinander. Um eine wirtschaftliche Herstellung der Einheit erreichen zu können, besteht die Einheit zweckmässigerweise aus Kunststoff.

Um eine bessere Führung der Ankerstange innerhalb des Bohrloches gewährleisten zu können, weist die Einheit vorzugsweise zum Verankerungsbereich hin anschliessend an die Dichtungsebene Zentriermittel auf, die mit der Dichtungsebene verbunden sind. Diese Zentriermittel sind beispielsweise segmentartig ausgebildet und erstrecken sich ausgehend von der Dichtungsebene des Dichtungselementes in das Bohrloch in Längsrichtung der Ankerstange. Der Aussendurchmesser dieser Zentriermittel entspricht dabei im wesentlichen dem Durchmesser des Bohrloches.

Um Bauteile in Form von Lagerplatten eines Schienensystemes unter Zwischenlage eines elastischen Dämmelementes auf einem Untergrund in Form einer Betonschwelle anordnen zu können, ist das Dichtungselement zweckmässigerweise im Bereich des elastischen Dämmelementes an der Wandung einer Durchgangsbohrung des elastischen Dämmelementes dicht anliegend angeordnet. Vor dem Einsetzen des Befestigungsankers in das mit aushärtender Masse verfüllte Bohrloch eines Untergrundes wird zuerst die elastische Einlage auf die Oberfläche des Untergrundes gelegt, wobei die Durchgangsbohrung der elastischen Einlage im wesentlichen koaxial zur Längsachse des Bohrloches ausgerichtet wird. Auf die elastische Einlage wird das Bauteil gelegt, das ebenfalls mit seiner Durchtrittsöffnung mit der Durchgangsbohrung der elastischen Einlage und dem Bohrloch fluchtet. Von aussen her wird der Befestigungsanker anschliessend dem Bohrloch zugeführt, wobei der Verankerungsbereich der Ankerstange innerhalb des Bohrloches zu liegen kommt. Das auf der Ankerstange angeordnete Dichtungselement kommt im Bereich der elastischen Einlage zu liegen und liegt dabei dichtend an der Bohrlochwandung der Durchgangsbohrung und der Ankerstange an. Sowohl die Durchtrittsöffnung als auch die Durchgangsbohrung können einen gegenüber dem Bohrloch grösseren Durchmesser aufweisen. Jene aushärtbare Masse, die beim Einsetzen des Befestigungsankers in das Bohrloch verdrängt wird, gelangt nur bis zur Dichtungsebene des Dichtungselementes.

Die Erfindung wird anhand von Zeichnungen, näher erläutert. Es zeigen:
- Fig. 1: einen nicht beanspruchten Befestigungsanker mit einem Dichtungselement in Form eines komprimierbaren Dichtungsringes zur Veranschaulichung des technischen Gebietes, auf dem die Erfindung liegt;
- Fig. 2: einen erfindungsgemässen Befestigungsanker mit einem Dichtungselement, das über Soll-Bruchstege mit der Zentrierhülse in Verbindung steht.

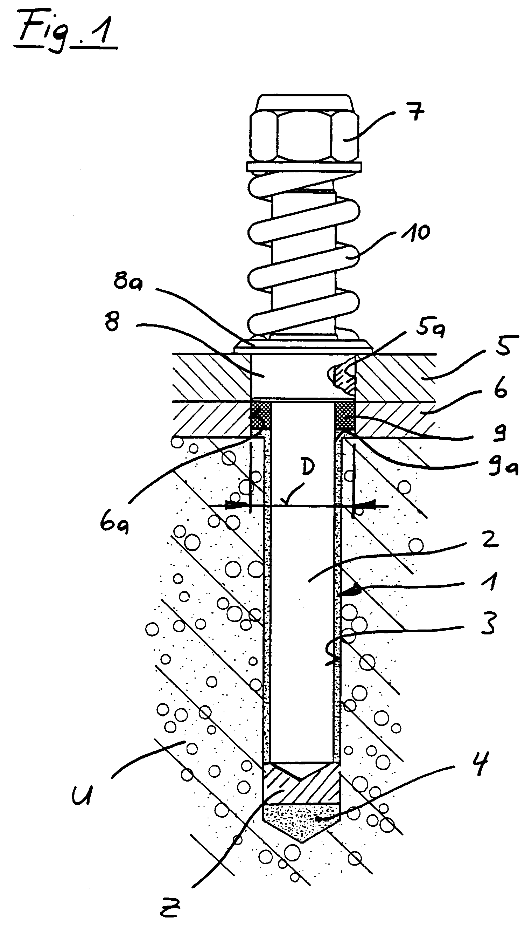

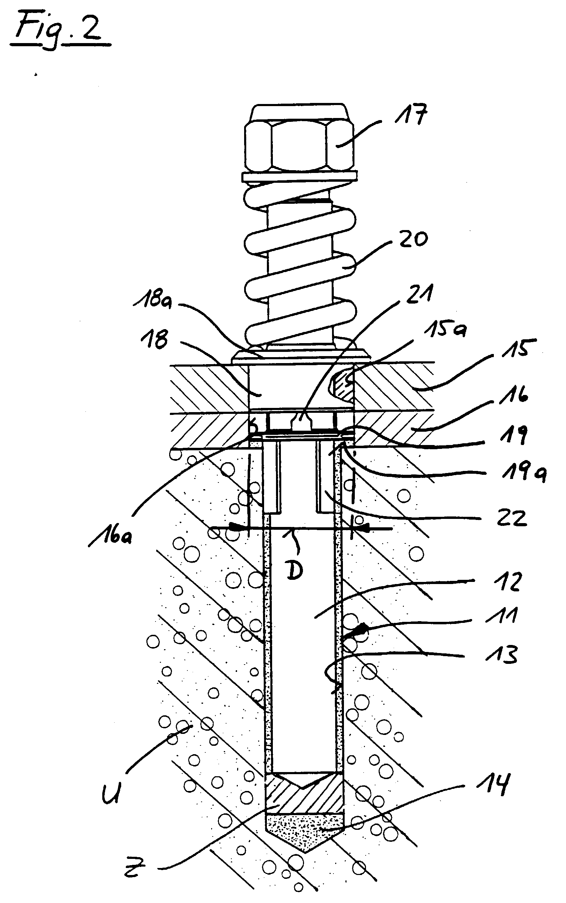

Die in den Figuren 1 und 2 dargestellten, in ein Bohrloch 3, 13 mit aushärtbarer Masse 4, 14 eingesetzten, nicht vorgespannten Befestigungsanker dienen der Festlegung eines Bauteiles 5, 15 in Form einer Lagerplatte eines Schienensystems auf einem Untergrund U in Form einer Betonschwelle unter Zwischenlage eines elastischen Dämmelementes 6, 16. Eine Ankerstange 1, 11 des Befestigungsankers ragt mit einem Verankerungsbereich 2, 12 in ein vorgefertigtes Bohrloch 3, 13 des Untergrundes U, das mit aushärtbarer Masse 4, 14 verfüllt ist. Im wesentlichen koaxial zur Längsachse des Bohrloches 3, 13 angeordnet befinden sich im Bauteil 5, 15 eine Durchtrittsöffnung 5a, 15a und in der elastischen Einlage 6,16 eine Durchgangsbohrung 6a, 16a. Die Durchgangsbohrung 6a, 16a und die Durchtrittsöffnung 5a, 15a haben einen gemeinsamen Durchmesser, der den Durchmesser des Bohrloches 3, 13 übersteigt. Am Grund des Bohrloches 3, 13 befindet sich ein Zentrierelement Z, das sich radial an der Bohrlochwandung abstützt und eine zentrale Aufnahme für einen im wesentlichen spitzförmig ausgebildeteten Endbereich des Verankerungsbereiches 2, 12 aufweist.

Im Bereich der elastischen Einlage 6, 16 ist ein Dichtungselement 9, 19 angeordnet, das die Ankerstange 1, 11 dichtend umgibt und dichtend an der Wandung der Durchgangsbohrung 6a, 16a anliegt. Die in Längsrichtung der Ankerstange 1, 11 gemessene Höhe des Dichtungselementes 9, 19 ist vorteilhafterweise kleiner als die Materialstärke der elastischen Einlage 6, 16. Das Dichtungselement 9, 19 besitzt eine zum Verankerungsbereich 2, 12 hingewandte Dichtungsebene 9a, 19a, die beim Einwirken einer äusseren Kraft zu einer Zentrierhülse 8, 18 hin versetzbar ist. Der Aussendurchmesser D der Dichtungsebene 9a, 19a entspricht dem Aussendurchmesser der Zentrierhülse 8, 18.

Die in die Durchtrittsöffnung 5a, 15a des Bauteiles 5, 15 ragende Zentrierhülse 8, 18 dient der Zentrierung der Ankerstange 1, 11 gegenüber der Durchtrittsöffnung 5a, 15a des Bauteiles 5, 15 bzw. gegenüber dem Bohrloch 3, 13 des Untergrundes U. Der Aussendurchmesser der Zentrierhülse 8, 18 entspricht im wesentlichen dem Durchmesser der Durchtrittsöffnung 5a, 15a im Bauteil. Die Ankerstange 1, 11 trägt in dem aus dem Bohrloch 3, 13 ragenden Endbereich ein Kraftangriffsmittel 7, 17 in Form einer Mutter. Die Zentrierhülse 8, 18 wirkt mit einem Kragen 8a, 18a bzw. einer scheibenförmigen Abdeckung zusammen, wobei der Durchmesser des Kragens 8a, 18a bzw. der Durchmesser der scheibenförmigen Abdeckung grösser ist als der Durchmesser der Durchtrittsöffnung 5a, 15a in dem Bauteil 5, 15. Zwischen dem Kragen 8a, 18a bzw. der scheibenförmigen Abdeckung und dem Kraftangriffsmittel 7, 17 ist eine, die Ankerstange 1, 11 umgebende Druckfeder 10, 20 angeordnet, die, wenn sie unter Vorspannung gesetzt wird, das Bauteil 5, 15 über den Kragen 8a, 18a bzw. die scheibenförmige Abdeckung unter Zwischenlage der elastischen Einlage 6, 16 gegen die Oberfläche des Untergrundes U drückt.

Nach dem Aushärten der Masse 4, 14 wird die Druckfeder 10, 20 mit Hilfe des Kraftangriffmittels 7, 17 auf Block zusammengespannt, so dass eine Vorspannkraft erzeugt wird, die das Bauteil 5, 15 bzw. die Lagerplatte gegen die Oberfläche des Untergrundes U drückt.

Beim erstmaligen Befahren eines nicht dargestellten Gleiskörpers des Schienensystemes mit ebenfalls nicht dargestellten Schienenfahrzeugen treten vertikale Belastungen auf das Bauteil 5, 15 bzw. die Lagerplatte auf, die eine vertikale Versetzung des Bauteiles 5, 15 zur Oberfläche des Untergrundes U zur Folge haben. Dabei wird die elastische Einlage 6, 16 in Längsrichtung der Ankerstange zusammengedrückt, so dass die Zentrierhülse 8, 18 zur Dichtungsebene 9a, 19a des Dichtungselementes 9, 19 versetzt wird.

Bei dem in Fig. 1 dargestellten Befestigungsanker besteht das Dichtungselement 9 aus einem komprimierbaren Dichtungsring, beispielsweise aus elastischem Schaumstoff.

Der in Fig. 2 dargestellte erfindungsgemäßen Befestigungsanker besitzt nun ein Dichtungselement 19 in Form eines Dichtungsringes, dessen in Längsrichtung der Ankerstange 11 gemessene Höhe geringer ist als die Wandstärke der elastischen Einlage 16. Der Dichtungsring steht mit der in die Durchtrittsöffnung 15a des Bauteiles 15 ragenden Zentrierhülse 18 über Soll-Bruchstege 21 in Verbindung. Die Zentrierhülse 18, die Soll-Bruchstege 21 und der Dichtungsring bilden zusammen eine Einheit, die aus wirtschaftlichen Gründen insbesondere aus Kunstsoff hergestellt ist. Beim Belasten des Bauteiles 15 erfolgt eine axiale Versetzung der Zentrierhülse 18 um den gleichen Betrag, so dass die Soll-Bruchstege 21 brechen. Nachdem die Soll-Bruchstege 21 zerstört sind, ist eine freie axiale Bewegung der Zentrierhülse 18 gegenüber dem Dichtungsring möglich.

## Patentansprüche

1. Befestigungsanker zum Befestigen eines auf der Obefläche eines Untergrundes (U) aufliegenden Bauteiles (15), mit einer, einen Verankerungsbereich (12), sowie einen, ein Kraftangriffsmittel (17) tragenden Endbereich aufweisenden Ankerstange (11), wobei der Verankerungsbereich (12) in ein vorgefertigtes, mit aushärtbarer Masse (14) verfülltes Bohrloch (13) des Untergrundes (U) einsetzbar ist, das Bauteil (15) eine Durchtrittsöffnung (15a) für den aus dem Bohrloch (13) ragenden Endbereich der Ankerstange (11) aufweist und die Ankerstange (11) im Bereich zwischen dem Kraftangriffsmittel (17) und dem Verankerungsbereich (12) von einer Zentrierhülse (18) und einem Dichtungselement in Form eines Dichtungsringes, welcher eine zum Verankerungsbereich (12) hingewandte, in Richtung des Kraftangriffsmittels (17) axial versetzbare Dichtungsebene (19a) aufweist, (19) umgeben ist, wobei die Zentrierhülse (18) in eingesetztem Zustand des Befestigungsankers in die Durchtrittsöffnung (15a) ragt, **dadurch gekennzeichnet,** dass der Dichtungsring (19) die Ankerstange (11) dichtend unmittelbar umgibt, zwischen einem dem Verankerungsbereich (12) zugewandten freien Ende der Zentrierhülse (18) und dem Verankerungsbereich (12) angeordnet ist und mittels Soll-Bruchstegen (21) in axialem Abstand von der Zentrierhülse (18) gehalten ist, wobei die Zerstörung der Soll-Bruchstege (21) eine freie axiale Bewegung der Zentrierhülse (18) gegenüber dem Dichtungsring (19) ermöglicht.

2. Befestigungsanker nach Anspruch 1, dadurch gekennzeichnet, dass der Aussendurchmesser (D) der Dichtungsebene (9a, 19a) dem Aussendurchmesser der Zentrierhülse (8, 18) entspricht.

3. Befestigungsanker nach Anspruch 1 oder 2 dadurch gekennzeichnet, dass die Zentrierhülse (18), die Soll-Bruchstege (21) und der Dichtungsring zu einer Einheit miteinander verbunden sind.

4. Befestigungsanker nach Anspruch 3, dadurch gekennzeichnet, dass die Einheit aus Kunststoff besteht.

5. Befestigungsanker nach Anspruch 3 oder 4, dadurch gekennzeichnet, dass die Einheit zum Verankerungsbereich (12) hin anschliessend an die Dichtungsebene (19a) Zentriermittel (22) aufweist.

6. Verwendung eines Befestigungsankers nach einem der Ansprüche 1 bis 5 zur Festlegung eines Bauteiles (1) in Form einer Lagerplatte eines Schienensystems auf einem Untergrund (U) in Form einer Betonschwelle unter Zwischenlage eines elastischen Dämmelementes (16), dadurch gekennzeichnet, dass das Dichtungselement (19) im Bereich des elastischen Dämmelementes (16) an der Wandung einer Durchgangsbohrung (16a) des elastischen Dämmelementes (16) dicht anliegend, angeordnet ist.

## Claims

1. Fastening anchor for fastening an assembly component (15) which rests on the surface of a base (U), comprising an anchor rod (11) with an anchorage area (12) as well as an end area which supports a load engaging means (17), and the anchorage area (12) is insertible into a prepared borehole (13) of a base (U) which is filled with a curable substance (14), and the assembly component (15) comprises a channel opening (15a) for the end area of the anchor rod (11) which protrudes from the borehole (13), and the anchor rod (11) is in the area between the load engaging means (17) and the anchorage area (12) surrounded by a centring sleeve (18) and a sealing element (19) in the form of a sealing ring which comprises a sealing plane (19a) which is facing towards the anchorage area (12) and axially displaceable in the direction of the load engaging means (17), and the centring sleeve (18) protrudes in the inserted state of the fastening anchor into the channel opening (15a), **characterised in that** the sealing ring (19) directly and sealingly encases the anchor rod (11), arranged between a free end of the centring sleeve (18) facing towards the anchorage area (12) and the anchorage area (12), held by means of nominal breaking webs (21) at an axial distance from the centring sleeve (18), and destruction of the nominal breaking webs (21) permits free axial movement of the centring sleeve (18) relative to the sealing ring (19).

2. Fastening anchor according to Claim 1, **characterised in that** the outside diameter (D) of the sealing plane (9a, 19a) corresponds with the outside diameter of the centring sleeve (8, 18).

3. Fastening anchor according to Claim 1 or 2, **characterised in that** the centring sleeve (18), the nominal breaking web (21) and the sealing ring are joined together into one unit.

4. Fastening anchor according to Claim 3, **characterised in that** the unit is made of plastic material.

5. Fastening anchor according to Claim 3 or 4, **characterised in that** the unit comprises centring means (22) towards the anchorage area (12) adjacent to the sealing plane (19a).

6. Use of a fastening anchor according to one of Claims 1 to 5 for securing an assembly component (1) in the form of a mounting plate of a track system on a base (U) in the form of a concrete step with an elastic damping element (16) placed thereinbetween, **characterised in that** the sealing element (19) is arranged to tightly abut the wall of a channel bore (16a) of the elastic damping element (16) in the area of the elastic damping element (16).

## Revendications

1. Boulon de fixation pour la fixation d'un élément structurel (15) posé sur la surface d'un support (U), comprenant une tige d'ancrage (11) qui comporte une zone d'ancrage (12) ainsi qu'une zone extrême portant un moyen d'application de force (17), la zone d'ancrage (12) pouvant être introduite dans un trou (13) préforé dans le support (U) et rempli de produit durcissable (14), l'élément structurel (15) étant pourvu d'un orifice traversant (15a) pour la zone extrême de la tige d'ancrage (11) dépassant du trou foré (13), et la tige d'ancrage (11) étant entourée par un manchon de centrage (18) et par un élément d'étanchéité en forme d'anneau d'étanchéité (19), lequel présente un plan d'étanchéité (19a) qui est tourné vers la zone d'ancrage (12) et est déplaçable axialement en direction du moyen d'application de force (17), le manchon de centrage (18) pénétrant dans l'orifice traversant (15a) lorsque le boulon de fixation est en place, caractérisé en ce que l'anneau d'étanchéité (19) entoure directement la tige d'ancrage (11) de manière étanche, est disposé entre une extrémité libre du manchon de centrage (18) tournée vers la zone d'ancrage (12) et la zone d'ancrage (12), et est maintenu à distance axiale du manchon de centrage (18) par des pattes de rupture imposée (21), la destruction des pattes de rupture imposée (21) permettant au manchon de centrage (18) de se déplacer librement dans le sens axial par rapport à l'anneau d'étanchéité (19).

2. Boulon de fixation selon la revendication 1, caractérisé en ce que le diamètre extérieur (D) du plan d'étanchéité (9a, 19a) correspond au diamètre extérieur du manchon de centrage (8, 18).

3. Boulon de fixation selon la revendication 1 ou 2, caractérisé en ce que le manchon de centrage (18), les pattes de rupture imposée (21) et l'anneau d'étanchéité sont réunis ensemble sous la forme d'une unité.

4. Boulon de fixation selon la revendication 3, caractérisé en ce que l'unité est réalisée en matière plastique.

5. Boulon de fixation selon la revendication 3 ou 4, caractérisé en ce que, en direction de la zone d'ancrage (12), l'unité comporte des moyens de centrage (22) adjacents au plan d'étanchéité (19a).

6. Utilisation d'un boulon de fixation selon l'une des revendications 1 à 5 pour fixer un élément structurel (1) en forme de plaque d'appui d'un système de rails sur un support (U) en forme de traverse en béton avec interposition d'un élément amortisseur élastique (16), caractérisée en ce que l'élément d'étanchéité (19) est disposé, dans la zone de l'élément amortisseur élastique (16), en contact étanche avec la paroi d'un trou débouchant (16a) de l'élément amortisseur élastique (16).
